# EUROPEAN PATENT SPECIFICATION

(11) **EP 4 246 053 B1**
(45) Date of publication and mention of the grant of the patent: **13.08.2025**
(21) Application number: 23162611.0
(22) Date of filing: 17.03.2023
(51) Int. Cl.: F24S 25/636, F24S 25/65, F24S 25/70, H02S 20/23, F24S 25/60, F24S 25/33, H02S 20/24, H02S 30/00, F24S 25/10, F24S 25/00

(54) **SYSTEM FOR THE CONCATENATED ASSEMBLY OF ROWS OF PHOTOVOLTAIC PANELS**
SYSTEM ZUR VERKETTETEN ANORDNUNG VON REIHEN VON FOTOVOLTAISCHEN PANEELEN
SYSTÈME POUR L'ASSEMBLAGE CONCATÉNÉ DE RANGÉES DE PANNEAUX PHOTOVOLTAÏQUES

(30) Priority: 18.03.2022 IT 202200005417
(43) Date of publication of application: 20.09.2023
(73) Proprietor: Contact Italia srl, 70022 Altamura (BA) (IT)
(72) Inventor: MAGGI, Francesco, 70022 ALTAMURA (BA) (IT)
(74) Representative: Giuliano, Natalia

(56) References cited:
- EP-A2- 2 256 353
- CA-A1- 2 829 919
- CN-U- 211 876 393
- DE-U1- 20 204 146
- DE-U1- 202009 007 490
- US-A1- 2011 174 353
- US-A1- 2014 102 996
- US-A1- 2014 224 165
- US-A1- 2015 129 014
- US-A1- 2020 266 755

## Description

The present invention relates to a system for the concatenated assembly of rows of photovoltaic panels.

In particular, the present invention relates to a system for a concatenated assembly of rows of photovoltaic panels useful for a concatenated installation of rows of panels arranged over a horizontal or vertical orientation, in which the panels can be fixed both on their short side and on their long side, with a variable inclination.

Several mounting systems for photovoltaic panels are currently known.

An example is described by the patent application EP3161390B1, which discloses a system for the inclined arrangement of photovoltaic modules on flat roofs comprising a front and rear support section. The profiles are mounted parallel to the flat roof using retaining elements fixed to the roof. Preferably, the upper sides of both support sections are rounded so that the photovoltaic module rests tangentially or substantially tangentially on said sections. The support sections can thus provide an optimal structural support to PV modules of various sizes at various angles.

A further mounting system is disclosed in the patent application EP2297790B1, describing an installation system for industrial photovoltaic plants which has the purpose of reliably holding large-scale frameless thin-film modules, considering high wind and snow loads. The installation system comprises two profiled crosspieces, parallel and spaced apart and equipped with planar support surfaces. Furthermore, it comprises a plurality of blocks fixed to the back of a photovoltaic module by means of an adhesive.

Finally, the patent application US2014102996A1 describes an assembly system of adjustable photovoltaic panels which allows to vary roofs and covering elements of the same roofs, while maintaining a rigid and safe assembly. The specific location for supporting feet and structural members of the mounting system can be varied to allow for variations in roof characteristics and different panel configurations. The mounting mechanisms are adjustable in both north/south and east/west directions to provide maximum layout flexibility.

Another solution is reported in the patent application US2020/266755A1 which describes a support assembly for mounting photovoltaic modules on a support surface and a mounting system including the same are disclosed herein. The support assembly may comprise a the body portion including a base portion and at least one upright support member coupled to the base portion, the at least one upright support member comprising an integrally formed ballast tray slot in one side thereof for receiving an upturned edge of a ballast tray; and at least one clamp subassembly coupled to the at least one upright support member of the body portion, the at least one clamp subassembly configured to be coupled to one or more photovoltaic modules. In addition to a plurality of support assemblies, the mounting system may further comprise at least one ballast tray support bracket, the ballast tray support bracket supporting a portion of a ballast tray on the support surface.

However, although advantageous in many aspects, the currently known assembling systems for concatenated PV modules do not allow rows of PV panels to be fixed alternately on their short side or also on their long side, and with a variable inclination, up to 30°.

In addition, the known mounting systems do not allow the panels to be mounted in an easy and practical way.

The purpose of the present invention is to provide a system for a concatenated assembly of rows of photovoltaic panels which allows to fix rows of such panels alternatively on their short side or on their long side, with variable inclination and in an easy and practical way, having therefore characteristics so as to overcome the limits which still affect the mounting systems of photovoltaic panels, with reference to the prior art.

According to the present invention, a system for a concatenated assembly of rows of photovoltaic panels is provided, as defined in claim 1.

For a better understanding of the present invention, a preferred embodiment is now described, purely by way of nonlimiting example, with reference to the attached drawings, in which:
- figure 1 shows an overall three-dimensional view of a system for a concatenated assembly of rows of photovoltaic panels, according to the invention;
- figures 2a-2b-2c show an overall side view and two detail views, respectively, of the system for a concatenated assembly of rows of photovoltaic panels, according to the invention;

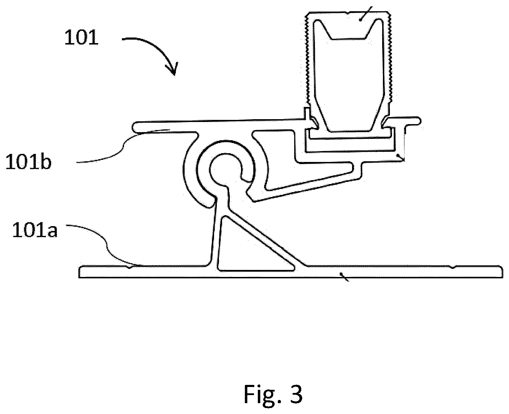

- figure 3 shows a detail view of a front assembly of the system for a concatenated assembly of rows of photovoltaic panels, according to the invention;

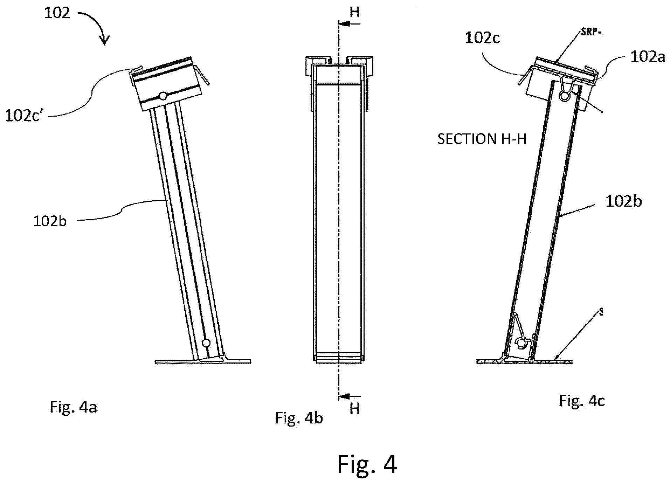

- figures 4a-4c show schematic views of a rear assembly of the system for a concatenated assembly of rows of photovoltaic panels, according to the invention;
- figures 5a-5f show schematic overall and detail views of the system for a concatenated assembly of rows of photovoltaic panels, according to the invention;
- figures 6a-6e show schematic overall and detail views of the system for a concatenated assembly of rows of photovoltaic panels, according to the invention;
- figures 7a-7b show schematic detail views of a junction of the system for a concatenated assembly of rows of photovoltaic panels, according to the invention;
- figures 8a-8e show schematic detail views of elements of the system for a concatenated assembly of rows of photovoltaic panels, according to the invention;
- figures 9a-9c show schematic detail views of an additional weight of the system for a concatenated assembly of rows of photovoltaic panels, according to the invention;
- figures 10a-10c show further schematic overall and detail views of the system for a concatenated assembly of rows of photovoltaic panels, according to the invention;
- figures 11a-11f show schematic views of a hook of the system for a concatenated assembly of rows of photovoltaic panels, according to the invention;
- figures 12a-12d show detail views of the system for a concatenated assembly of rows of photovoltaic panels, according to the invention;

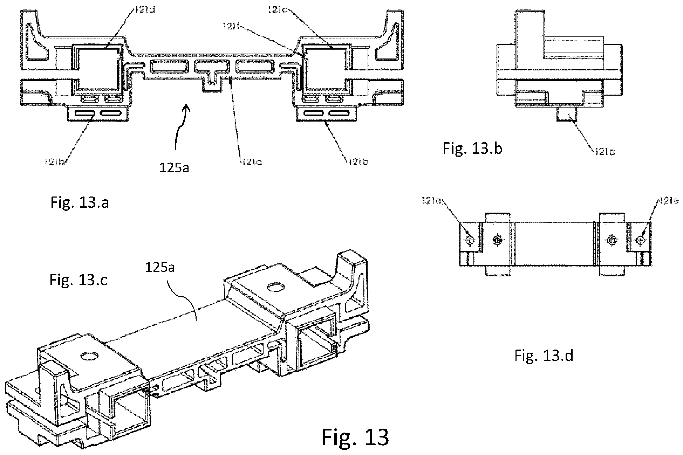

- figures 13a-13d show views of a template of the system for a concatenated assembly of rows of photovoltaic panels, according to the invention;
- figures 14a-14b show, respectively, a sectional view of a base profile and of a junction of the base profile of the system for a concatenated assembly of rows of photovoltaic panels, according to the invention.

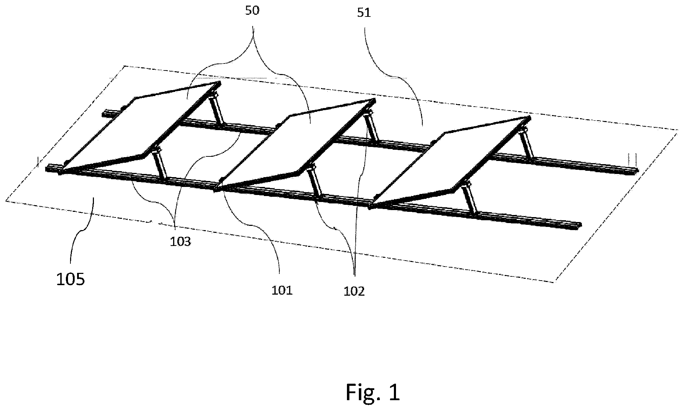

With reference to these figures, and in particular to figure 1, a system for a concatenated assembly of rows of photovoltaic panels is shown, according to the invention.

In more detail, a system 100 for a concatenated assembly of rows of photovoltaic panels, configured for mounting at least one photovoltaic panel 50 over a surface 51, comprises:
- at least one bottom profile 103 mounted longitudinally over the surface 51, for example a roof, and comprising, in correspondence with an upper portion, a longitudinal and central groove 103a;
- at least one front support 101 anchored to the at least one bottom profile 103 and to a front portion of the at least one photovoltaic panel 50;
- at least one rear support 102, anchored to the bottom profile 103 and to a rear portion of the photovoltaic panel 50, having a predefined height depending on the inclination required for the photovoltaic panel 50.

Therefore, according to the invention, two front supports 101 and two rear supports 102 are fixed to each photovoltaic panel 50.

Preferably, the system 100 comprises a rubber mat 105, made of EPDM, placed between the surface 51 and the bottom profile 103.

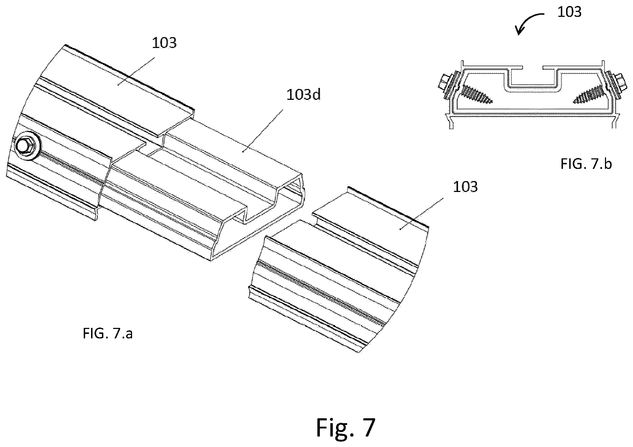

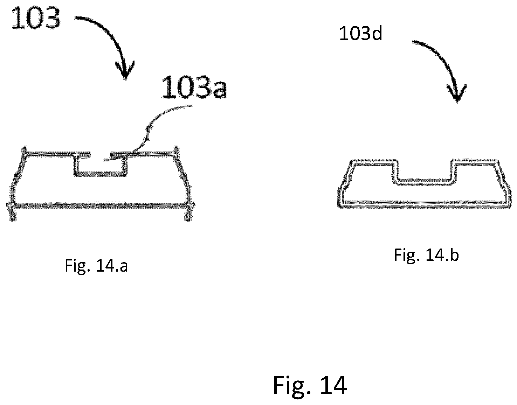

According to one aspect of the invention, the system 100 further comprises:
- at least one junction element 103d to the bottom profile 103, shown in figure 7 and in figure 14b;
- at least one locking clamp of the photovoltaic panels 50.

According to one aspect of the invention, the bottom profile 103 comprises in correspondence with an upper portion a longitudinal and central groove 103a, shown in figure 7 and in figure 14.

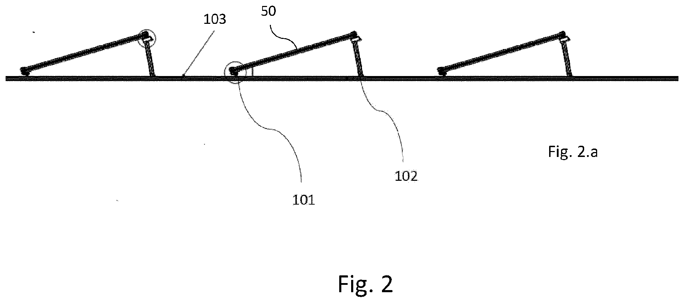

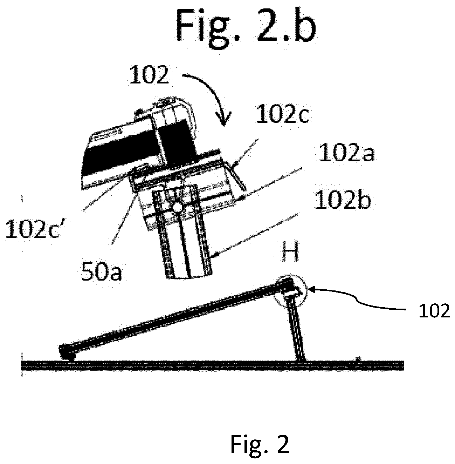

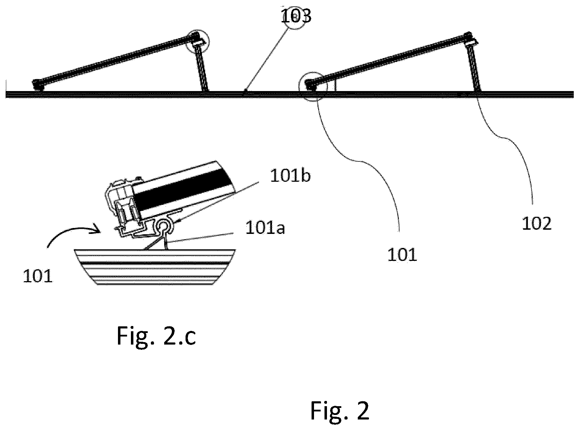

According to one aspect of the invention, the front support 101 consists of:
- a first bottom element 101a able to be fixed to the longitudinal and central groove 103a of the bottom profile 103 through hammer head screws, and a first upper element 101b to which the first bottom element 101a matches forming a hinge, as shown in figure 2c, so that the first upper element 101b is able to rotate within a predetermined angle with respect to the first bottom element 101a.

According to one aspect of the invention, a frame 50a of the photovoltaic panel 50 is placed on the first upper element 101b, while an end clamp is mounted and fixed in the groove 103a.

According to one aspect of the invention, the rear support 102 comprises a second base profile 102a, and a box-shaped element 102b which engages and couples, by means of a through bolt, both with the bottom profile 103 and with the second base profile 102a.

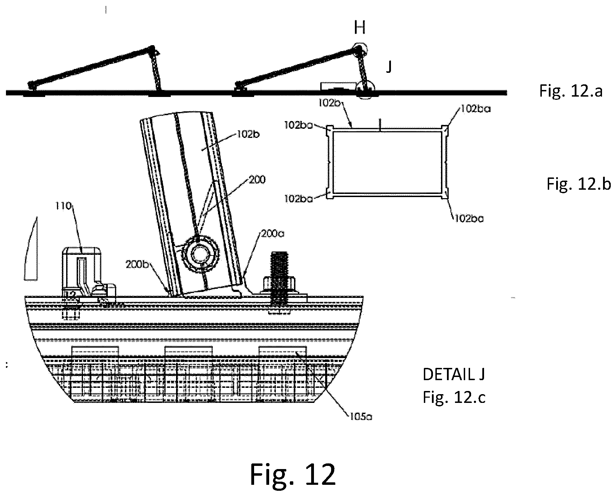

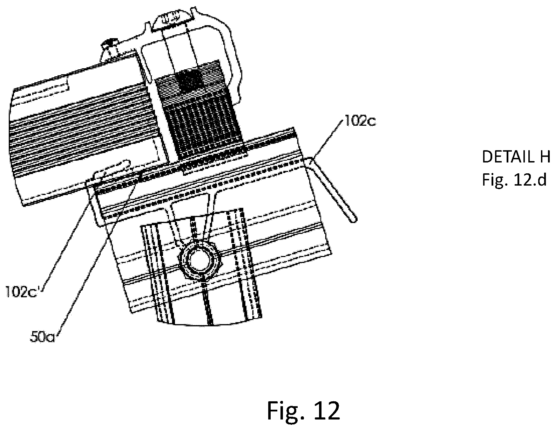

In particular, the box-shaped element 102b engages and couples with a profile 200, included in the system 100 and shown in figure 12, and with the second base profile 102a.

The profile 200 comprises upper flaps 200a, and lower flaps 200b able to match by snap-fit with the box-shaped element 102b, preventing overturning phenomena.

Furthermore, the box-shaped element 102b shown in section in figure 12b comprises four protrusions 102ba in correspondence with its outer corners, so as to reinforce the box-shaped element 102b allowing it to resist wind stresses acting on the photovoltaic panel 50, even with high inclination angles.

The second base profile 102a also couples with a second upper element 102c. The second upper element 102c is provided with an external flap, suitable for the assembly of a possible windbreak casing, and with an inner C-shaped contour 102c' for mounting the frame 50a of the photovoltaic panel 50, which is inserted and brought to abutment, as shown in detail in figure 12.

The second base profile 102a has an upper groove 102f in which the end clamp for blocking the photovoltaic panels 50 can be fixed.

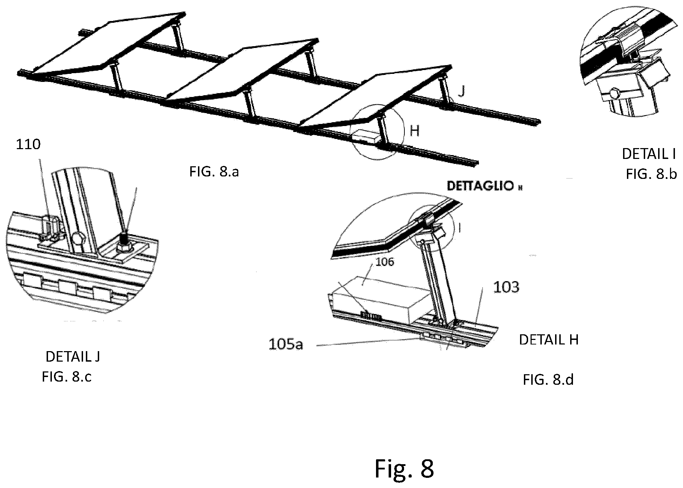

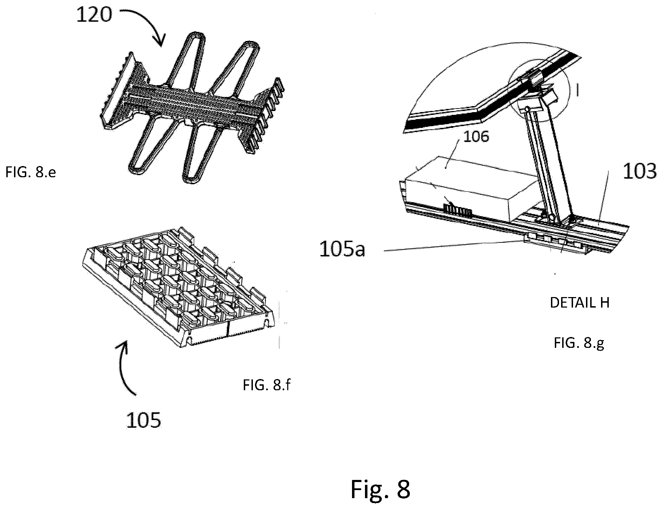

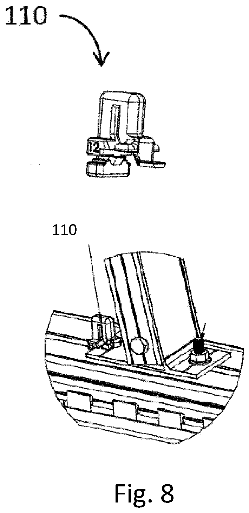

According to one aspect of the invention, as shown in figure 8, the front and rear supports 101, 102 are fixed to the bottom profile 103 by means of two hammer head screws.

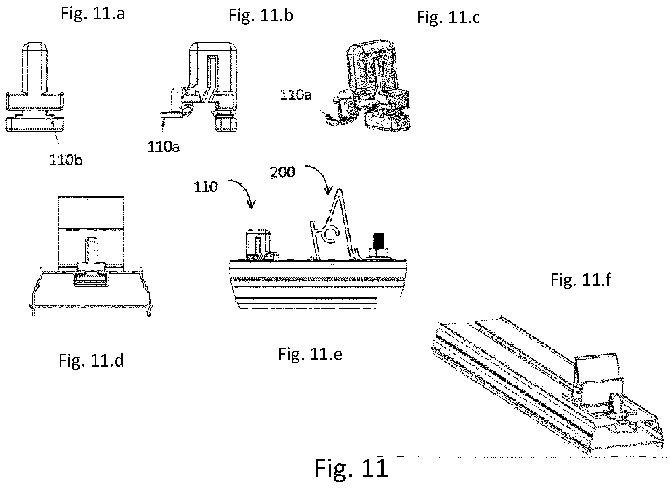

According to the invention, the front support 101 is fixed to the bottom profile 103 by means of a hook 110, e.g., a plastic hook, which has a front protrusion 110a, shown in figure 11, which snaps into a hole of the first bottom element 101a. The hook 110 also has a hammer head contour 110b able to be fixed to the bottom profiles 103, by means of the profile 200 by inserting and rotating the hammer head contour 110b in a longitudinal and central groove 103a of the bottom profile 103.

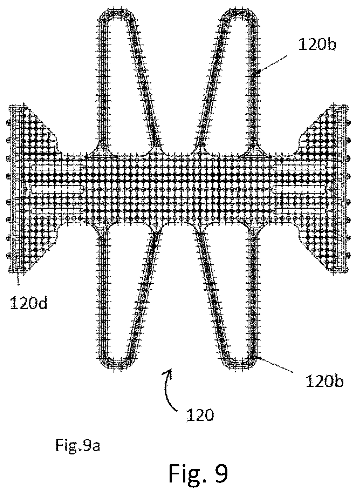

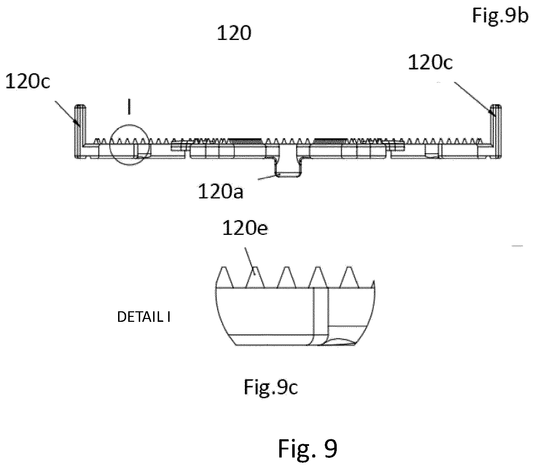

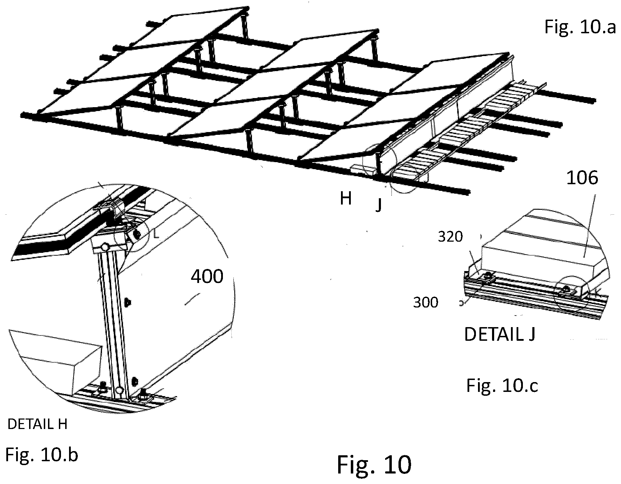

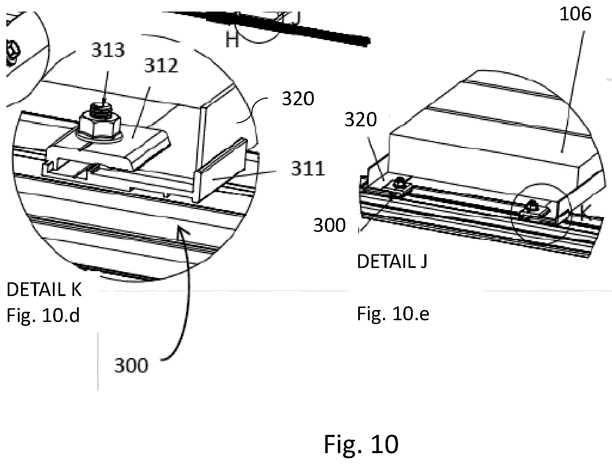

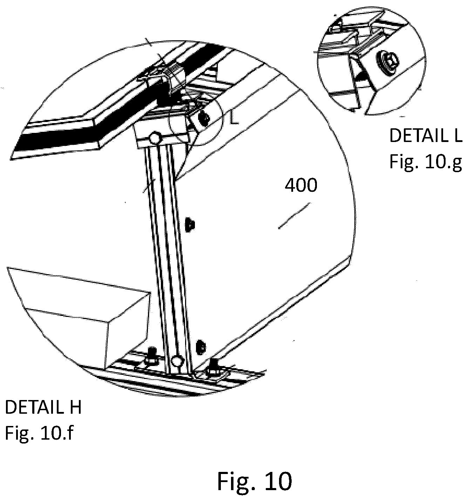

According to one aspect of the invention, the system 100 further comprises additional weights 106, each equipped with a fastening element, shown in figures 9 and 10.

According to one aspect of the invention, the additional weights 106 are positioned on a support 120, for example a plastic support, which has side protrusions 120b, two for each side over a central symmetry line, suitable for increasing the contacting surface. The support 120 also has two side flaps 120c, which extend vertically and orthogonally with respect to the side protrusions 120b, necessary to laterally contain a concrete block which constitutes a preferable additional weight 106, avoiding overturning/translation due to the wind load. If the additional weight 106 has huge dimensions, such as not to be contained between the two side flaps 120c, the support 120 can also be supplied without the flaps 120c themselves: in this case the friction between the support 120 and the concrete block is increased through the presence of wedge-shaped projections 120e on the flat portion of the support 120.

Figure 10 shows how, according to one aspect of the invention, an additional weight 106 is supported at the bottom by an L-shaped angular bracket 320, fixed in turn by means of a further hook 300.

According to one aspect of the invention, the support 120 for additional weights 106, shown in figure 9a, comprises in its lower portion a protrusion 120a, shown in figure 9b, and is able to be mounted by inserting such a protrusion 120a into the groove 103a of the bottom profile 103. The side protrusions 120b, preferably equal to four protrusions, are able to increase the supporting surface of the additional weight 106, while the two side flaps 120c are able to block the additional weight. The support 120 also comprises a plurality of separating baffles 120d along the base of the two side flaps 120c, which favors the detachment of the two flaps 120c if the concrete block which constitutes the additional weight 106 has large dimensions and cannot be contained between the same flaps 120c.

According to one aspect of the invention, the support 120 further comprises over its flat portion a plurality of wedge-shaped protrusions 120e, useful to increase the friction between the support 120 itself and the lower surface of the concrete block 106.

According to one aspect of the invention, as shown in figure 8f, the rubber mat 105 interposed between the bottom profile 103 and the surface 51, whether it is an attic or a roof, is able to absorb the deformations of the structure and to generate a friction with the roof covering.

The assembly of the rubber mat 105 to the bottom profile 103, preferably made of aluminium, takes place by snap fastening of a plurality of teeth 105a, present laterally on the upper surface of the rubber mat 105. The lower surface of the rubber mat 105 is knurled, in order to increase the friction and at the same time facilitate the flow of water.

According to one aspect of the invention, as shown in figure 7, the longitudinal bottom profile 103 is connected to the junction elements 103d by means of four self-drilling screws to be positioned laterally.

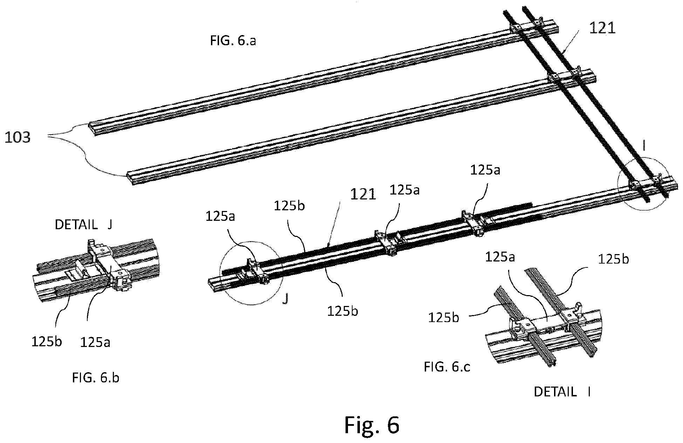

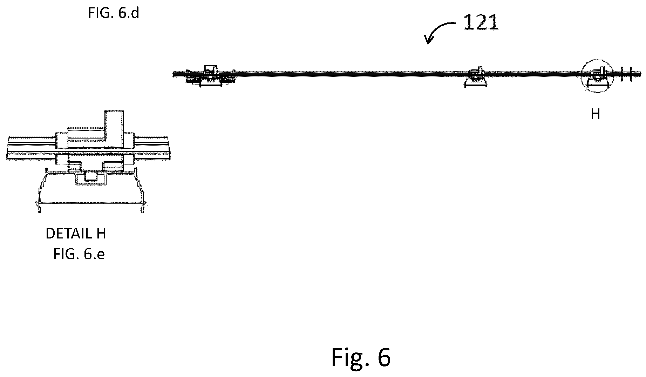

Figure 6 shows an overall view of a template 121 for positioning the supports or bottom profiles 103. The template 121 is composed of at least two elements 125a, preferably three plastic elements 125a, and two parallel aluminium profiles 125b. The plastic elements 125a are placed and fixed transversally between the two aluminium profiles 125b.

Figure 6b and Figure 6c show sectional views of an element 125a.

Advantageously, the particular geometry of the template 121 allows both the bottom profiles 103 and the front and rear supports 101, 102 to be positioned. It is possible to adjust the distance between the three plastic elements 125a and consequently block the aluminium profiles 125b with the two pre-assembled screws.

The front support 101 and the rear support 102 are positioned by mean of the template 121.

According to one aspect of the invention, the geometry of the single element 125a, 125b which constitutes the template 121 is composed of septum on the lower part necessary for coupling with the groove 103a of the bottom profile 103 both over the longitudinal direction 121a and over the transverse direction 121b. The element 125a is assembled with two aluminium profiles 125b which fit into the two pockets 121d. The locking of the two profiles 125b takes place by tightening the screws in correspondence with the holes 121e and by deformation of the two grooves in correspondence with the point 121f.

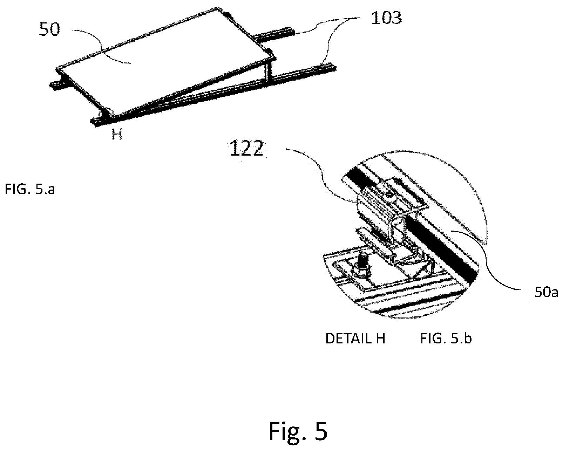

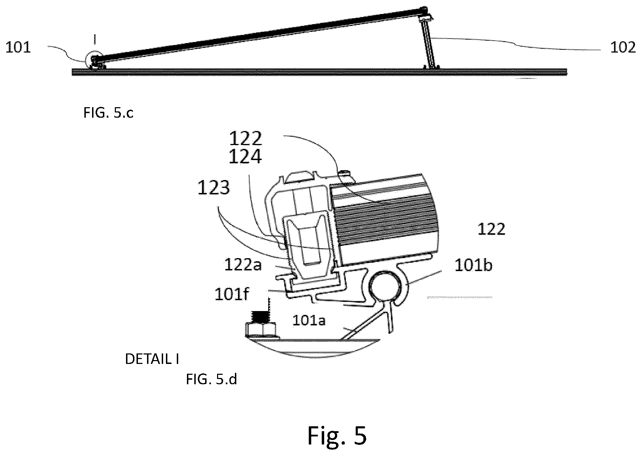

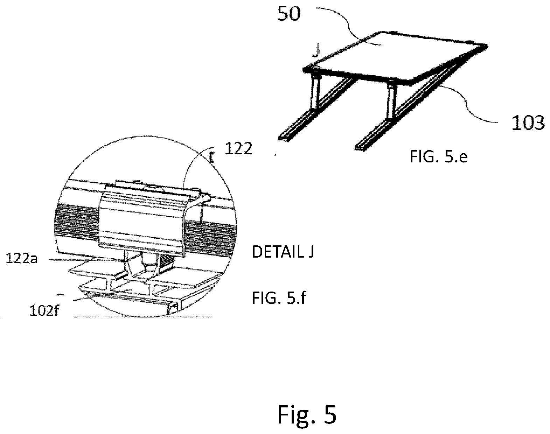

According to one aspect of the invention, as shown in fig. 5, the system 100 comprises at least one fixing clamp 122 suitable for the supports already described. The fixing clamp 122 comprises a central body 122a which differs from the snap fastening system already described.

The assembly of the central body 122a takes place by lateral insertion into grooves 101f, 102f present, respectively, on the upper profiles of the front support 101 and of the rear support 102. During the tightening of the screw, the upper part of the fixing clamp 122 abuts with the frame 50a of the panel 50 causing the central body 122a to move upwards, with the central body 122a itself which has lower hooks which come into contact with the two upper hooks present in the groove of the upper element 101b.

According to one aspect of the invention, the central body 122a has two knurled side surfaces 123 which, by coupling with the knurled part 124 of the upper piece, or of the frame 50a, facilitate the locking of the entire clamp to the photovoltaic panel 50.

According to another aspect of the invention, with reference to the detail view 'I' of figure 5, the two elements 101a and 101b couple together forming a hinge and allowing the rotation of the upper element 101b on the bottom element 101a. The rotation allows to mount the photovoltaic panel 50 at different inclinations, up to 30° with respect to the surface 51.

According to another aspect of the invention, the system 100 further comprises transverse bracings, shown in figure 10.

According to one aspect of the invention, the system 100 comprises locking hooks for the aforementioned transverse bracings, shown in figure 10.

According to another aspect of the invention, the system 100 comprises windbreak casings, shown in figure 10.

Figure 10 shows the assembly of a typical configuration with three rows of PV panels 50 linked together. In order to stiffen the frame 50a it is used a transverse corner bracing 320, which is connected to the several bottom profiles 103 by means of a second hook 300.

According to one aspect of the invention, the second hook 300 (shown in detail 'K' of figure 10) consists of a first and a second element 311, 312, connected to each other by a hammer head screw 313. The first and the second element 311, 312 block the transverse corner bracing without the need to drill holes on it.

The transverse corner bracing 320 mounted in pairs, one piece at the bottom and the other at the top, also has the function of supporting the additional weights 106 (as shown in the detail 'J' of figure 10) with the advantage of being able to translate the position of the fastenings thanks to the use of the hook 300, whose fixing to the bottom profile 103 is adjustable and does not require drilling.

According to one aspect of the invention, the system 100 comprises a plurality of windbreak casings 400. It is also possible to assemble each windbreak casing 400 in correspondence with the rear panel support 102. The fixing of the windbreak casing 400 takes place by means of self-drilling screws also exploiting the protruding wing present on the second upper element 102c.

The geometry of the 400 windbreak casing may vary, according to the wind load present in the installation site.

Advantageously according to the invention, the system for a concatenated assembly of rows of photovoltaic panels allows the inclination of the PV panel 50 to be adjusted by custom-made cutting the box-shaped element 102b of the rear support 102, thus changing the height of the rear support 102 while the other profiles remain unchanged.

Advantageously according to the invention, the system for a concatenated assembly of rows of photovoltaic panels allows to facilitate the assembly of the PV panel, by inserting the frame on the rear support and hitting it on the front support.

Advantageously according to the invention, the system for a concatenated assembly of rows of photovoltaic panels allows the use of the same rotary clamp to block the panel both on the short side and on the long side.

It is finally clear that the system for a concatenated assembly of rows of photovoltaic panels, described and illustrated herein, may be subject to modifications and variations without departing from the protective scope of the present invention, as defined in the appended claims.

## Claims

1. System (100) for a concatenated assembly of rows of photovoltaic panels, configured for mounting at least one photovoltaic panel (50) over a surface (51), comprising:
- at least one bottom profile (103) mounted longitudinally over the surface (51) and comprising, in correspondence with an upper portion, a longitudinal and central groove (103a);
- at least one front support (101) anchored to the at least one bottom profile (103) and to a front portion of the at least one photovoltaic panel (50), consisting of: a first bottom element (101a) able to be fixed to the longitudinal and central groove (103a) of the at least one bottom profile (103), and a first upper element (101b) to which the first bottom element (101a) matches forming a hinge, so that the first upper element (101b) is able to rotate within a predetermined angle with respect to the first bottom element (101a);
- at least one rear support (102) anchored to the at least one bottom profile (103) and to a rear portion of the at least one photovoltaic panel (50), comprising a second base profile (102a) comprising an upper groove, a box-shaped element (102b) engaging and matching with both the at least one bottom profile (103) and the second base profile (102a), and a second upper element (102c) coupled with the second base profile (102a);
**characterized in that** said second upper element (102c) comprises an external flap and an inner C-shaped contour (102c') for mounting a frame (50a) of the at least one photovoltaic panel (50);
wherein the system further comprises a hook (110) for fixing the at least one front support (101) to the at least one bottom profile (103), said hook (110) comprising a front protrusion (110a) able to be snapped into a hole of the first bottom element (101a), and a hammer head contour (110b) configured to be fixed to the at least one bottom profile (103) by inserting and rotating the hammer head contour (110b) in the longitudinal and central groove (103a) of the at least one bottom profile (103).

2. System (100) according to claim 1, **characterized in** comprising a profile (200) for fixing the box-shaped element (102b) to the at least one bottom profile (103), said profile (200) comprising upper flaps (200a) and lower flaps (200b) able to match by snap-fit with the box-shaped element (102b).

3. System (100) according to claim 1, **characterized in** comprising a support (120) for additional weights (106) comprising:
- in a lower portion a protrusion (120a), able to be inserted in the groove of the at least one bottom profile (103);
- four side protrusions (120b), able to increase the supporting surface of the additional weight (106);
- two side flaps (120c) able to block the additional weights (106);
- a plurality of separator baffles (120d) along the base of the two side flaps (120c), configured for the detachment of said two side flaps (120c) in case the additional weight (106) has increased dimensions and is not able to be contained between the two side flaps (120c)
- comprises also in correspondence with a flat portion a plurality of wedge-shaped protrusions (120e) able to increase the friction between the support (120) and the lower surface of the additional weight (106).

4. System (100) according to claim 1, **characterized in** comprising a rubber mat (105) interposed between said at least one bottom profile (103) and the surface (51), able to absorb the deformations of the structure and to generate a friction with a covering roof, said rubber mat (105) comprising on an upper surface a plurality of teeth (105a) able for snap fastening the rubber mat (105) to the at least one bottom profile (103).

5. System (100) according to claim 1, **characterized in** comprising at least one fixing clamp (122) comprising a central body (122a) able to be inserted laterally into grooves (101f, 102f) comprised on upper profiles respectively of the at least one front support (101) and of the at least one rear support (102), said central body (122a) having lower hooks which abut with two upper hooks included in the groove of the upper profile (101b) and two knurled side surfaces able to be coupled to a knurled portion of the upper profile (101b), configured for the locking of the fixing clamp (122) to the at least one photovoltaic panel (50).

6. System (100) according to claim 1, **characterized in** comprising a plurality of transverse bracings and a plurality of hooks locking each transverse bracing to the at least one bottom profile (103), each hook comprised in the plurality of hooks consisting of two elements (311, 312), connected by means of a hammer head screw (313), able to lock the transverse bracing without the need to drill holes on said transverse bracing.

7. System (100) according to claim 1, **characterized in** comprising a plurality of windbreak casings (400), fixed in correspondence with the at least one rear support (102) in proximity of the box-shaped element (102b).

8. System (100) according to claim 1, **characterized in** comprising a template (121), consisting of three plastic elements (125a) and two parallel aluminium profiles (125b), in which the elements (125a) are fixed transversally to the two profiles (125b), said template (121) being configured for the positioning of the bottom profiles (103) and of the front (101) and rear (102) supports, each of said plastic elements (125a) comprising in correspondence with a lower part a septum over a longitudinal direction (121a) and a septum over a transverse direction (121b), two pockets (121d), and a plurality of holes (121e) for housing tightening screws able to fix the parallel aluminium profiles (125b).

## Patentansprüche

1. System (100) für eine verkettete Anordnung von Reihen von fotovoltaischen Paneelen, das zum Montieren mindestens eines fotovoltaischen Paneels (50) über einer Fläche (51) konfiguriert ist, umfassend:
- mindestens ein Bodenprofil (103), das in Längsrichtung über der Fläche (51) montiert ist und in Übereinstimmung mit einem oberen Abschnitt eine Längs- und Mittelnut (103a) umfasst;
- mindestens eine vordere Stütze (101), die an dem mindestens einen Bodenprofil (103) und an einem vorderen Abschnitt des mindestens einen fotovoltaischen Paneels (50) verankert ist, bestehend aus: einem ersten Bodenelement (101a), das an der Längs- und Mittelnut (103a) des mindestens einen Bodenprofils (103) befestigt werden kann, und einem ersten oberen Element (101b), mit dem das erste Bodenelement (101a) zusammenpasst, um ein Scharnier zu bilden, sodass sich das erste obere Element (101b) in Bezug auf das erste Bodenelement (101a) innerhalb eines vorbestimmten Winkels drehen kann;
- mindestens eine hintere Stütze (102), die an dem mindestens einen Bodenprofil (103) und an einem hinteren Abschnitt des mindestens einen fotovoltaischen Paneels (50) verankert ist, umfassend ein zweites Basisprofil (102a), das eine obere Nut, ein kastenförmiges Element (102b), das sowohl mit dem mindestens einen Bodenprofil (103) als auch mit dem zweiten Basisprofil (102a) in Eingriff steht und zu diesen passt, und ein zweites oberes Element (102c), das mit dem zweiten Basisprofil (102a) gekoppelt ist, umfasst;
**dadurch gekennzeichnet, dass** das zweite obere Element ( 102c) eine äußere Klappe und eine innere C-förmige Kontur (102c') zum Montieren eines Rahmens (50a) des mindestens einen fotovoltaischen Paneels (50) umfasst;
wobei das System ferner einen Haken (110) zum Befestigen der mindestens einen vorderen Stütze (101) an dem mindestens einen Bodenprofil (103) umfasst, wobei der Haken (110) einen vorderen Vorsprung (110a), der in ein Loch des ersten Bodenelements (101a) einrasten kann, und eine Hammerkopfkontur (110b) umfasst, die dazu konfiguriert ist, an dem mindestens einen Bodenprofil (103) befestigt zu werden, indem die Hammerkopfkontur (110b) in die Längs- und Mittelnut (103a) des mindestens einen Bodenprofils (103) eingesetzt und dort gedreht wird.

2. System (100) nach Anspruch 1, **dadurch gekennzeichnet, dass** es ein Profil (200) zum Befestigen des kastenförmigen Elements (102b) an mindestens einem Bodenprofil (103) umfasst, wobei das Profil (200) obere Klappen (200a) und untere Klappen (200b) umfasst, die durch Einrasten mit dem kastenförmigen Element (102b) zusammenpassen können.

3. System (100) nach Anspruch 1, **dadurch gekennzeichnet, dass** es eine Stütze (120) für Zusatzgewichte (106) umfasst, umfassend:
- einen Vorsprung (120a), der in die Nut des mindestens einen Bodenprofils (103) eingesetzt sein kann, in einem unteren Abschnitt;
- vier seitliche Vorsprünge (120b), welche die Stützfläche des Zusatzgewichts (106) vergrößern können;
- zwei Seitenklappen (120c), welche die zusätzlichen Gewichte (106) blockieren können;
- eine Vielzahl von Trennleitblechen (120d) entlang der Basis der zwei Seitenklappen (120c), die zum Abnehmen der zwei Seitenklappen (120c) konfiguriert ist, falls das Zusatzgewicht (106) größere Abmessungen aufweist und nicht zwischen den zwei Seitenklappen (120c) enthalten sein kann
- umfasst zudem in Übereinstimmung mit einem flachen Abschnitt eine Vielzahl von keilförmigen Vorsprüngen (120e), welche die Reibung zwischen der Stütze (120) und der unteren Fläche des Zusatzgewichts (106) erhöhen kann.

4. System (100) nach Anspruch 1, **dadurch gekennzeichnet, dass** es eine Gummimatte (105) umfasst, die zwischen dem mindestens einen Bodenprofil (103) und der Fläche (51) eingefügt ist, welche die Verformungen der Konstruktion absorbieren und Reibung mit einem abdeckenden Dach erzeugen kann, wobei die Gummimatte (105) an einer oberen Fläche eine Vielzahl von Zähnen (105a) umfasst, mit denen die Gummimatte (105) durch Einrasten an dem mindestens einen Bodenprofil (103) befestigt werden kann.

5. System (100) nach Anspruch 1, **dadurch gekennzeichnet, dass** es mindestens eine Befestigungsklemme (122) umfasst, umfassend einen zentralen Körper (122a), der seitlich in Nuten (101f, 102f) eingesetzt werden kann, die an den oberen Profilen der mindestens einen vorderen Stütze (101) bzw. der mindestens einen hinteren Stütze (102) vorgesehen sind, wobei der zentrale Körper (122a) untere Haken, die an zwei oberen Haken anliegen, die in der Nut des oberen Profils (101b) beinhaltet sind, und zwei geriffelte Seitenflächen aufweist, die an einen geriffelten Abschnitt des oberen Profils (101b) gekoppelt sein können, die zum Verriegeln der Befestigungsklemme (122) an dem mindestens einen fotovoltaischen Paneel (50) konfiguriert sind.

6. System (100) nach Anspruch 1, **dadurch gekennzeichnet, dass** es eine Vielzahl von Querverstrebungen und eine Vielzahl von Haken umfasst, die jede Querverstrebung an dem mindestens einen Bodenprofil (103) verriegelt, wobei jeder Haken, der in der Vielzahl von Haken vorgesehen ist, aus zwei Elementen (311, 312) besteht, die durch eine Hammerkopfschraube (313) verbunden sind und die Querverstrebung verriegeln können, ohne dass Löcher in die Querverstrebung gebohrt werden müssen.

7. System (100) nach Anspruch 1, **dadurch gekennzeichnet, dass** es eine Vielzahl von Windschutzgehäusen (400) umfasst, die in Übereinstimmung mit der mindestens einen hinteren Stütze (102) in der Nähe des kastenförmigen Elements (102b) befestigt ist.

8. System (100) nach Anspruch 1, **dadurch gekennzeichnet, dass** es eine Schablone (121) umfasst, die aus drei Kunststoffelementen (125a) und zwei parallelen Aluminiumprofilen (125b) besteht, wobei die Elemente (125a) quer zu den zwei Profilen (125b) befestigt sind, wobei die Schablone (121) für die Positionierung der Bodenprofile (103) und der vorderen (101) und hinteren (102) Stütze konfiguriert ist, wobei jedes der Kunststoffelemente (125a) in Übereinstimmung mit einem unteren Teil eine Trennwand über eine Längsrichtung (121a) und eine Trennwand über eine Querrichtung (121b), zwei Aussparungen (121d) und eine Vielzahl von Löchern (121e) zum Aufnehmen von Spannschrauben umfasst, welche die parallelen Aluminiumprofile (125b) befestigen können.

## Revendications

1. Système (100) pour un assemblage concaténé de rangées de panneaux photovoltaïques, configuré pour le montage d'au moins un panneau photovoltaïque (50) sur une surface (51), comprenant :
- au moins un profilé inférieur (103) monté longitudinalement sur la surface (51) et comprenant, en correspondance avec une partie supérieure, une rainure longitudinale et centrale (103a) ;
- au moins un support avant (101) ancré audit au moins un profilé inférieur (103) et à une partie avant de l'au moins un panneau photovoltaïque (50), constitué de : un premier élément inférieur (101a) apte à être fixé à la rainure longitudinale et centrale (103a) de l'au moins un profilé inférieur (103), et un premier élément supérieur (101b) auquel s'adapte le premier élément inférieur (101a) en formant une charnière, de sorte que le premier élément supérieur (101b) est apte à tourner au sein d'un angle prédéterminé par rapport au premier élément inférieur (101a) ;
- au moins un support arrière (102) ancré audit au moins un profilé inférieur (103) et à une partie arrière de l'au moins un panneau photovoltaïque (50), comprenant un second profilé de base (102a) comprenant une rainure supérieure, un élément en forme de boîte (102b) venant en prise et s'adaptant à la fois à l'au moins un profilé inférieur (103) et au second profilé de base (102a), et un second élément supérieur (102c) accouplé au second profilé de base (102a) ;
**caractérisé en ce que** ledit second élément supérieur (102c) comprend un rabat externe et un contour interne en forme de C (102c') pour le montage d'un cadre (50a) de l'au moins un panneau photovoltaïques (50) ;
dans lequel le système comprend en outre un crochet (110) pour la fixation de l'au moins un support avant (101) à l'au moins un profilé inférieur (103), ledit crochet (110) comprenant une saillie avant (110a) apte à être encliquetée dans un trou du premier élément inférieur (101a), et un contour en tête de marteau (110b) configuré pour être fixé à l'au moins un profilé inférieur (103) par insertion et rotation du contour en tête de marteau (110b) dans la rainure longitudinale et centrale (103a) de l'au moins un profilé inférieur (103).

2. Système (100) selon la revendication 1, **caractérisé en ce qu'**il comprend un profilé (200) pour la fixation de l'élément en forme de boîte (102b) à l'au moins un profilé inférieur (103), ledit profilé (200) comprenant des rabats supérieurs (200a) et des rabats inférieurs (200b) aptes à s'adapter par encliquetage avec l'élément en forme de boîte (102b).

3. Système (100) selon la revendication 1, **caractérisé en ce qu'**il comprend un support (120) pour des masses additionnelles (106) comprenant :
- dans une partie inférieure, une saillie (120a), apte à être insérée dans la rainure de l'au moins un profilé inférieur (103) ;
- quatre saillies latérales (120b), aptes à augmenter la surface de support de la masse additionnelle (106) ;
- deux rabats latéraux (120c) aptes à bloquer les masses additionnelles (106) ;
- une pluralité de déflecteurs séparateurs (120d) le long de la base des deux rabats latéraux (120c), configurés pour le détachement desdits deux rabats latéraux (120c) au cas où la masse additionnelle (106) a des dimensions accrues et ne peut pas être contenue entre les deux rabats latéraux (120c)
- comprenant également, en correspondance avec une partie plane, une pluralité de saillies en forme de coins (120e) aptes à augmenter le frottement entre le support (120) et la surface inférieure de la masse additionnelle (106).

4. Système (100) selon la revendication 1, **caractérisé en ce qu'**il comprend un tapis en caoutchouc (105) intercalé entre ledit au moins un profilé inférieur (103) et la surface (51), apte à absorber les déformations de la structure et à générer un frottement avec une toiture de couverture, ledit tapis en caoutchouc (105) comprenant sur une surface supérieure une pluralité de dents (105a) aptes à fixer par encliquetage le tapis en caoutchouc (105) à l'au moins un profilé inférieur (103).

5. Système (100) selon la revendication 1, **caractérisé en ce qu'**il comprend au moins une pince de fixation (122) comprenant un corps central (122a) apte à être inséré latéralement dans les rainures (101f, 102f) ménagées respectivement sur les profilés supérieurs de l'au moins un support avant (101) et de l'au moins un support arrière (102), ledit corps central (122a) présentant des crochets inférieurs venant en butée avec deux crochets supérieurs inclus dans la rainure du profilé supérieur (101b) et deux surfaces latérales moletées aptes à être accouplées à une partie moletée du profilé supérieur (101b), configurées pour le verrouillage de la pince de fixation (122) sur l'au moins un panneau photovoltaïque (50).

6. Système (100) selon la revendication 1, **caractérisé en ce qu'**il comprend une pluralité de contreventements transversaux et une pluralité de crochets verrouillant chaque contreventement transversal à l'au moins un profilé inférieur (103), chaque crochet compris dans la pluralité de crochets étant constitué de deux éléments (311, 312), reliés au moyen d'une vis en tête de marteau (313), apte à verrouiller le contreventement transversal sans qu'il soit nécessaire de percer des trous dans ledit contreventement transversal.

7. Système (100) selon la revendication 1, **caractérisé en ce qu'**il comprend une pluralité de boîtiers brise-vent (400), fixés en correspondance avec l'au moins un support arrière (102) à proximité de l'élément en forme de boîte (102b).

8. Système (100) selon la revendication 1, **caractérisé en ce qu'**il comprend un gabarit (121), constitué de trois éléments en plastique (125a) et de deux profilés parallèles en aluminium (125b), dans lequel les éléments (125a) sont fixés transversalement aux deux profilés (125b), ledit gabarit (121) étant configuré pour le positionnement des profilés inférieurs (103) et des supports avant (101) et arrière (102), chacun desdits éléments en plastique (125a) comprenant, en correspondance avec une partie inférieure, un septum sur une direction longitudinale (121a) et un septum sur une direction transversale (121b), deux poches (121d), et une pluralité de trous (121e) pour le logement de vis de serrage aptes à fixer les profilés parallèles en aluminium (125b).
